# FASCICULE DE BREVET EUROPEEN

(11) **EP 3 670 947 B1**
(45) Date de publication et mention de la délivrance du brevet: **02.02.2022**
(21) Numéro de dépôt: 19218182.4
(22) Date de dépôt: 19.12.2019
(51) Int. Cl.: F16C 33/46, F16C 43/06

(54) **PROCÉDÉ DE MONTAGE DE ROULEAUX DANS UNE CAGE DE RÉTENTION**
VERFAHREN ZUR MONTAGE VON ROLLEN IN EINEM RÜCKHALTEKÄFIG
METHOD FOR ASSEMBLING ROLLERS IN A RETENTION CAGE

(30) Priorité: 21.12.2018 FR 1873806
(43) Date de publication de la demande: 24.06.2020
(73) Titulaire: NTN-SNR ROULEMENTS, 74000 Annecy (FR)
(72) Inventeur: REDOUTEY, Louis, 73410 Entrelacs (FR)
(74) Mandataire: Sayettat, Julien Christian

(56) Documents cités:
- FR-A1- 3 062 692
- US-A1- 2013 175 287
- US-A1- 2016 076 593

## Description

L'invention concerne un procédé de montage de rouleaux dans une cage de rétention desdits rouleaux dans un palier à roulement.

On connaît des cages comprenant deux couronnes qui sont espacées axialement et entre lesquelles s'étendent une pluralité de ponts de sorte à former, entre deux ponts adjacents et un segment de chacune desdites couronnes, une alvéole dans laquelle un rouleau est destiné à être retenu en pouvant tourner autour de son axe propre, afin de permettre la rotation relative de deux ensembles d'un palier à roulement entre lesquels ladite cage est disposée.

Par exemple, le document US-2016/0076593 décrit une cage dont les deux couronnes présentent chacune au moins un passage axial, les passages axiaux des deux couronnes étant notamment alignés pour former avec les ponts un passage de communication fluidique, notamment pour du lubrifiant.

US 2013/175287 A1 divulgue les caractéristiques du préambule de la revendication 1.

Pour permettre le montage des rouleaux dans les alvéoles d'une cage de rétention, on connaît des procédés qui prévoient d'entrainer la cage en rotation et de disposer lesdits rouleaux dans leur alvéole respective lors de ladite rotation. En particulier, il existe des procédés qui prévoient d'équiper les ponts d'une structure extérieure qui est saillante radialement, les rouleaux étant disposés successivement en regard radial d'une alvéole et en interférence circonférentielle avec une structure extérieure d'un pont délimitant ladite alvéole, afin d'entrainer en rotation ledit rouleau sur une course sur laquelle le rouleau est poussé radialement dans ladite alvéole.

Il est connu de réaliser de telles cages par moulage et injection, notamment en injectant une matière polymère dans un moule comprenant deux parties qui définissent entre elles une cavité de forme complémentaire à celle de la cage à obtenir. En particulier, le moule peut comprendre des tiroirs qui sont extraits dans la direction radiale, notamment afin de former les alvéoles.

Pour pouvoir effectuer le montage des rouleaux de façon industrielle, il est connu de monter la cage sur un dispositif motorisé d'entraînement en rotation. Dans ce cas, il est important de fiabiliser la solidarisation en rotation de la cage à ce dispositif, notamment pour éviter tout déplacement relatif entre eux qui pourrait nuire à la bonne introduction des rouleaux dans les alvéoles.

L'invention vise à perfectionner l'art antérieur en proposant un procédé de montage dans lequel la cage de rétention est pourvue de moyens de fiabilisation de son entraînement en rotation pour le montage des rouleaux, lesdits moyens étant simples à réaliser, notamment par moulage, et conformes aux contraintes relatives à l'encombrement de ladite cage et à sa résistance mécanique en utilisation.

A cet effet, l'invention propose un procédé de montage de rouleaux dans une cage de rétention desdits rouleaux dans un palier à roulement, le procédé prévoyant de réaliser une cage comprenant deux couronnes qui sont espacées axialement et une pluralité de ponts s'étendant entre lesdites couronnes de sorte à former, entre deux ponts adjacents et un segment de chacune desdites couronnes, une alvéole dans laquelle un rouleau est destiné à être retenu en pouvant tourner autour de son axe propre, ledit procédé prévoyant d'entrainer en rotation ladite cage et de disposer lesdits rouleaux dans leur alvéole respective lors de ladite rotation, ledit procédé prévoyant de former des créneaux dans au moins une couronne, l'entrainement en rotation de la cage étant réalisé au moyen de griffes motorisées en rotation qui sont engagées dans lesdits créneaux.

D'autres objets et avantages de l'invention apparaîtront dans la description qui suit, faite en référence aux figures jointes, dans lesquelles :
- les figures 1a et 1b sont des représentations en perspective vues depuis respectivement un côté d'une cage de rétention selon un mode de réalisation de l'invention ;
- la figure 2 est une représentation en vue de dessus de la cage des figures 1a et 1b montée sur un outil adapté pour le montage de rouleaux par mise en œuvre d'un procédé selon l'invention ;
- la figure 3 est une représentation partielle de la cage des figures précédentes ;
- la figure 4 est une représentation partielle en coupe radiale d'une étape de réalisation de la cage dans un procédé selon un mode de réalisation de l'invention ;
- les figures 5a, 5b et 5c sont des représentations partielles en vue de dessus des étapes successives du montage d'un rouleau dans une alvéole dans un procédé selon un mode de réalisation de l'invention ;
- la figure 6 est une représentation en perspective d'un outil pour l'entraînement en rotation de la cage dans un procédé selon un mode de réalisation de l'invention ;
- la figure 7 est une représentation en perspective du montage de l'outil de la figure 6 sur un ensemble d'entraînement en rotation dudit outil, une cage étant montée sur ledit outil pour être entraînée en rotation.

En relation avec ces figures, on décrit ci-dessous un procédé de montage de rouleaux 1 dans une cage 2 de rétention desdits rouleaux dans un palier à roulement, ainsi qu'une cage 2 de rétention pour la mise en oeuvre d'un tel procédé de montage.

La cage 2 de rétention est agencée pour assurer le maintien des rouleaux 1 dans l'espace de roulement formé entre deux ensembles d'un palier à roulement, afin de permettre la rotation desdits rouleaux sur les pistes dudit espace, et ainsi la rotation relative desdits ensembles, tout en empêchant les contacts entre lesdits rouleaux pour ne pas contraindre leur rotation respective.

Pour ce faire, la cage 2 de rétention présente deux couronnes 3, 4 qui sont espacées axialement, ainsi qu'une pluralité de ponts 5 répartis circonférentiellement en s'étendant axialement entre lesdites couronnes, de sorte à former, entre deux ponts 5 adjacents et un segment 3a, 4a de chacune desdites couronnes, une alvéole 6 dans laquelle un rouleau 1 est destiné à être retenu par interaction géométrique tout en pouvant tourner autour de son axe propre.

Dans la description, les termes «extérieur» et « intérieur » sont définis par rapport à l'axe A de révolution de la cage 2, respectivement pour une localisation éloignée et proche dudit axe. Les termes « axial » et « radial » sont également définis par rapport à cet axe A, respectivement pour une direction suivant cet axe A et s'éloignant ou se rapprochant de lui.

La géométrie des alvéoles 6 peut être agencée pour pouvoir disposer les rouleaux 1 en appui circonférentiel de part et d'autre sur respectivement une portée 7a formée sur une face latérale 5a d'un pont 5, les portées 7a pouvant présenter un profil de géométrie complémentaire à celle de la périphérie desdits rouleaux pour faciliter leur roulement sur lesdites portées.

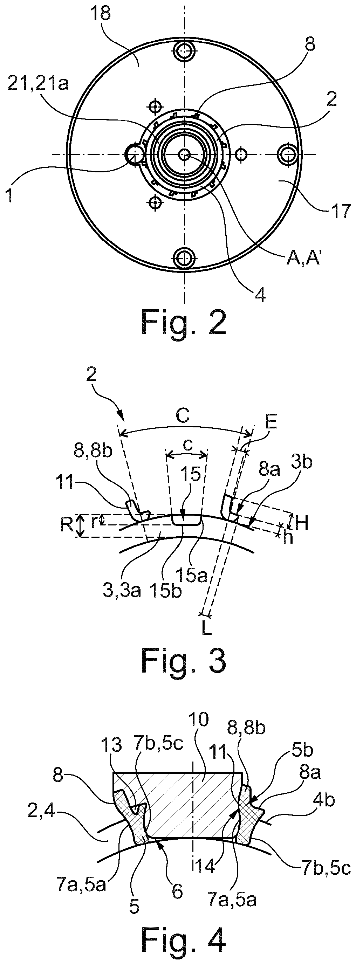

Comme représenté notamment sur la figure 4, chaque pont comprend deux faces latérales 5a, 5c tournées respectivement vers l'intérieur de deux alvéoles 6 adjacentes, chaque face latérale 5a, 5c présentant une portée 7a, 7b pour l'appui circonférentiel de respectivement un rouleau 1 avec un profil légèrement concave correspondant à la géométrie cylindrique dudit rouleaux.

Pour permettre le montage des rouleaux 1, le procédé prévoit d'entraîner la cage 2 en rotation autour de son axe de révolution A et de disposer lesdits rouleaux dans leur alvéole 6 respective lors de ladite rotation.

Pour ce faire, le procédé prévoit d'équiper les ponts 5 d'une structure extérieure 8 qui est saillante radialement, les rouleaux 1 étants disposés successivement en regard radial d'une alvéole 6 et en interférence circonférentielle avec une structure extérieure 8 d'un pont 5 délimitant ladite alvéole, afin d'entrainer en rotation ledit rouleau sur une course sur laquelle le rouleau 1 est poussé radialement dans ladite alvéole.

En particulier, le procédé peut prévoir de disposer les rouleaux 1 à monter dans la cage 2 dans un empilement, notamment vertical, s'étendant parallèlement à l'axe A de rotation de la cage 2, chaque rouleau 1 étant amené par gravité en regard d'une alvéole 6 après l'entraînement en rotation par ladite cage du rouleau 1 précédent.

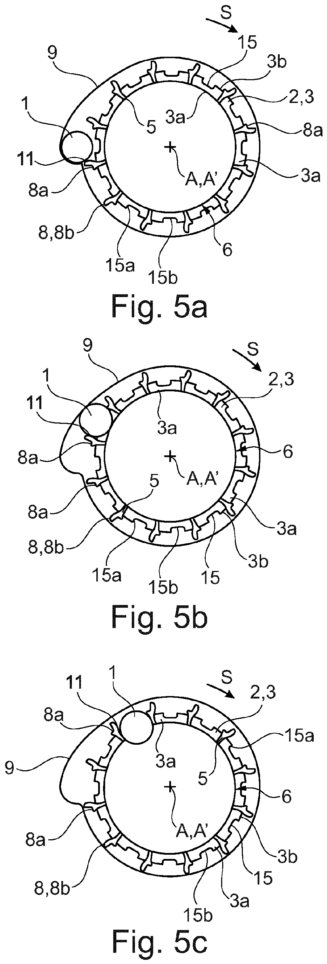

Comme représenté sur les figures 5a, 5b et 5c, le procédé prévoit de faire rouler la périphérie des rouleaux 1 le long d'une surface de came 9 sur leur course d'entraînement en rotation, ladite surface étant agencée pour rapprocher progressivement ledit rouleau du centre de la cage 2, et ainsi effectuer sa mise en place dans l'alvéole 6 en regard.

Le procédé prévoit de réaliser la cage 2 par moulage, notamment par injection d'une matière polymère dans un moule définissant une cavité de forme complémentaire à ladite cage. En particulier, le moule comprend deux parties présentant chacune une empreinte qui sont agencées pour former la cavité lors de l'assemblage desdites parties.

En relation avec la figure 4, l'une des empreintes du moule comprend des tiroirs 10 formant au moins partiellement les alvéoles 6, lesdits tiroirs étant extraits desdites alvéoles lors du démoulage en venant en interférence avec les structures extérieures 8.

En particulier, les tiroirs 10 peuvent être extraits dans la direction radiale vers l'extérieur des alvéoles 6, notamment lorsque les alvéoles 6 ne peuvent pas être démoulées axialement. Dans le mode de réalisation représenté, les ponts 5 s'étendent strictement entre les couronnes 3, 4, sans recouvrement axial entre lesdits ponts et lesdites couronnes.

Le procédé prévoit d'entraîner la cage 2 en rotation dans un sens S suivant lequel les structures extérieures 8 présentent une géométrie en L inversé formée par une paroi extérieure 8a du pont 5 et une saillie 8b s'étendant radialement depuis ladite paroi extérieure, les rouleaux 1 étant entraînés en rotation par la face avant 11 de la saillie 8b d'une structure extérieure 8 qui est en avant dans le sens de rotation S par rapport à la paroi extérieure 8a de ladite structure extérieure.

Ainsi, on réduit l'encombrement au niveau de la sortie des tiroirs 10 qui est formée entre une face avant 11 et la paroi extérieure 8a adjacente, ce qui limite leur interaction avec les structures extérieures 8, et ce tout en garantissant une bonne interférence desdites structures extérieures avec les rouleaux 1 pour permettre l'entraînement en rotation desdits rouleaux lors de leur montage dans la cage 2.

La géométrie des structures extérieures 8 permet également d'augmenter leur souplesse en déformation, ce qui est favorable à l'extraction des tiroirs 10 et limite les risques d'endommagement desdites structures extérieures et/ou de la cage 2 lors du démoulage.

De façon avantageuse, un évidement 13 est formé entre les parois extérieure 8a et les saillies 8b des structures extérieures 8, notamment sur les parois extérieures 8a desdits ponts, afin d'augmenter davantage la souplesse desdites structures extérieures.

Comme représenté notamment sur la figure 4, les saillies 8b des structures extérieures 8 s'étendent depuis un bord des ponts 5, notamment le bord avant 5b, la face avant 11 desdites saillies étant décalée vers l'avant de la portée avant 7a du pont 5 sur laquelle le rouleau 1 est destiné à être retenu.

Un tel agencement permet de former une zone 14 de contre dépouille avec des dimensions réduites pour ne pas entraver l'extraction des tiroirs 10 lors du démoulage, mais suffisamment importantes pour fiabiliser la retenue des rouleaux 1 dans les alvéoles 6 après leur montage dans la cage 2.

Dans le mode de réalisation représenté, les parois extérieures 8a des ponts 5 sont disposées en saillie radiale des couronnes 3, 4, afin de faciliter l'interférence des structures extérieures 8 avec les rouleaux 1, et donc de garantir l'entraînement en rotation desdits rouleaux. En particulier, la hauteur h des parois extérieures 8a mesurée radialement depuis la surface extérieure 3b, 4b des couronnes 3, 4 est d'au moins 0,75 mm.

En relation avec la figure 3, les saillies 8b des structures extérieures 8 présentent des dimensions adaptées à leur fonction et pouvant être facilement réalisable par moulage, notamment :
- une hauteur H supérieure à la longueur circonférentielle L des parois extérieures 8a desdites structures ; et/ou
- une épaisseur E sensiblement égale à la hauteur h desdites parois extérieures.

Pour pouvoir effectuer le montage des rouleaux 1 de façon industrielle, le procédé prévoit de former des créneaux 15 dans au moins une couronne 3, l'entraînement en rotation de la cage 2 étant réalisé au moyen de griffes 16 motorisées en rotation qui sont engagées dans lesdits créneaux.

Les créneaux 15 sont formés durant l'étape de moulage de la cage 2. En particulier, les créneaux 15 sont formés sur la surface extérieure 3b de la couronne 3.

Dans le mode de réalisation représenté, les créneaux 15 présentent deux bords latéraux 15a sensiblement radiaux entre lesquels s'étend un fond circonférentiel 15b. En particulier, la hauteur radiale r des bords 15a est comprise entre 20% et 60% de la hauteur radiale R de la couronne 3.

Chaque créneau 15 est disposé uniquement sur un segment 3a de la couronne 3 séparant deux ponts 5 adjacents, et notamment à équidistance desdits ponts adjacents. Ainsi, on conserve une hauteur R de couronne 3 nominale à proximité des ponts 5, et notamment des structures extérieures 8 pour l'entraînement en rotation des rouleaux 1, afin de limiter les risques de déformation des alvéoles 6 par les griffes 16 dans les créneaux 15.

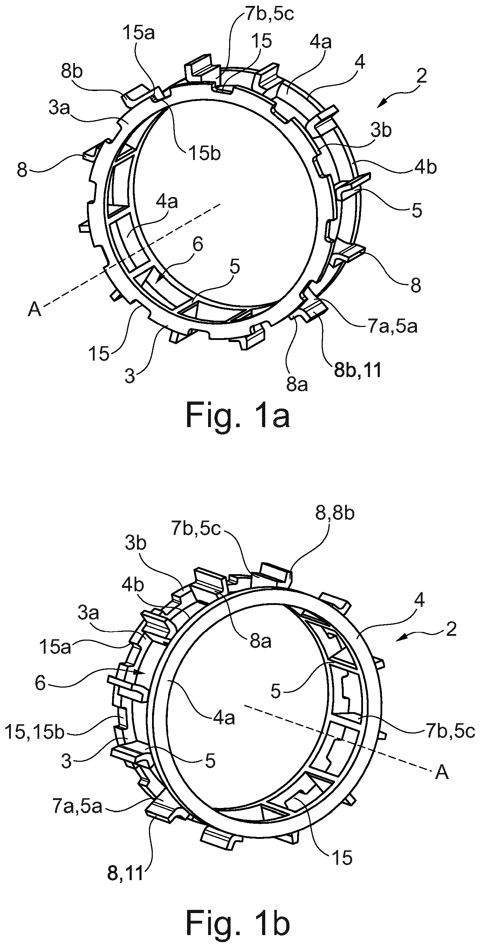

De façon avantageuse, comme représenté notamment sur les figures 1a,1b, 5a, 5b et 5c, chaque segment 3a de couronne 3 séparant deux ponts 5 adjacents est équipé d'un créneau 15, ce qui permet de saisir la cage 2 sur toute sa circonférence. Une telle saisie permet de limiter les risques de déformation de la cage 2 et de compenser ses éventuels défauts de fabrication, en plus de répartir uniformément le couple de rotation sur toute ladite cage et de simplifier son indexation lors de sa prise en charge par les griffes 16.

Chaque créneau 15 présente un fond circonférentiel 15b dont la longueur c est comprise entre 30% et 70% de la longueur circonférentielle C du segment 3a sur lequel il est disposé.

Dans le mode de réalisation représenté, tous les ponts 5 et tous les créneaux 15 présentent des géométries identiques, ce qui permet de faciliter la réalisation de la cage 2.

Le procédé prévoit des griffes 16 de forme complémentaire à celles des créneaux 15, afin de fiabiliser la saisie de la cage 2 par lesdites griffes, et donc d'assurer un bon entraînement en rotation de ladite cage.

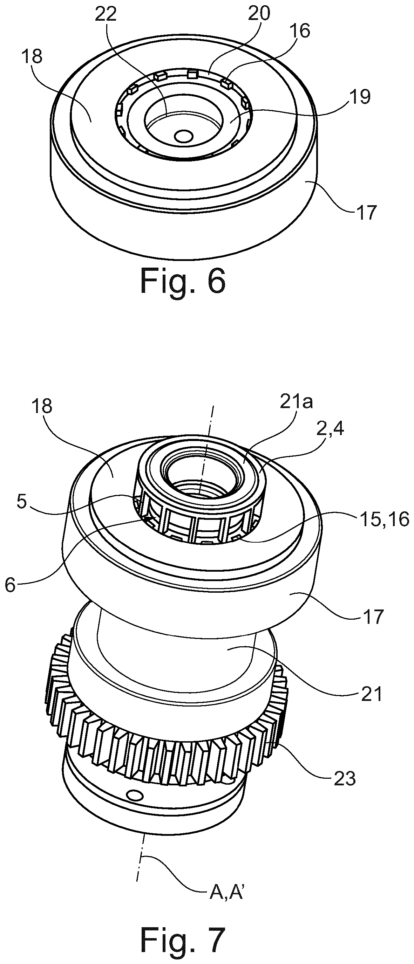

En particulier, comme représenté sur la figure 6, le procédé prévoit d'utiliser un outil 17 de forme circulaire comprenant une plateforme supérieure 18 sur laquelle est formée une empreinte circulaire 19 de réception de la cage 2, ladite empreinte comprenant une paroi périphérique 20 sur laquelle des griffes 16 sont équiréparties angulairement pour assurer la saisie de la cage 2 sur toute sa circonférence.

En relation avec les figures 2 et 7, l'outil 17 portant les griffes 16 est monté sur une broche 21 d'entraînement en rotation. En particulier, la cage 2 est montée autour d'une bague 21a qui est disposée dans un alésage 22 formé au centre de l'outil.

La broche 21 porte une roue dentée 23 destinée à être engrenée avec un pignon motorisé, afin d'être entraînée en rotation suivant un axe A' confondu avec l'axe A de révolution de la cage 2, et ainsi d'entraîner en rotation ladite cage autour dudit axe.

## Revendications

1. Procédé de montage de rouleaux (1) dans une cage (2) de rétention desdits rouleaux dans un palier à roulement, le procédé prévoyant de réaliser une cage (2) comprenant deux couronnes (3, 4) qui sont espacées axialement et une pluralité de ponts (5) s'étendant entre lesdites couronnes de sorte à former, entre deux ponts (5) adjacents et un segment (3a, 4a) de chacune desdites couronnes, une alvéole (6) dans laquelle un rouleau (1) est destiné à être retenu en pouvant tourner autour de son axe propre, ledit procédé prévoyant d'entrainer en rotation ladite cage et de disposer lesdits rouleaux dans leur alvéole (6) respective lors de ladite rotation, ledit procédé étant **caractérisé en ce qu'**il prévoit de former des créneaux (15) dans au moins une couronne (3), l'entrainement en rotation de la cage (2) étant réalisé au moyen de griffes (16) motorisées en rotation qui sont engagées dans lesdits créneaux.

2. Procédé de montage selon la revendication 1, **caractérisé en ce qu'**il prévoit d'équiper les ponts (5) d'une structure extérieure (8) qui est saillante radialement, les rouleaux (1) étant disposés successivement en regard radial d'une alvéole (6) et en interférence circonférentielle avec une structure extérieure (8) d'un pont (5) délimitant ladite alvéole afin d'entrainer en rotation ledit rouleau sur une course sur laquelle le rouleau (1) est poussé radialement dans ladite alvéole.

3. Procédé de montage selon la revendication 2, **caractérisé en ce qu'**il prévoit une surface de came (9) pour venir pousser radialement les rouleaux (1) dans les alvéoles (6) sur leur course d'entrainement.

4. Procédé de montage selon l'une quelconque revendications 1 à 3, **caractérisé en ce qu'**il prévoit de réaliser la cage (2) par moulage au moyen de tiroirs (10) formant au moins partiellement les alvéoles (6), lesdits tiroirs étant extraits desdites alvéoles lors du démoulage dans la direction radiale vers l'extérieur desdites alvéoles.

5. Procédé de montage selon l'une quelconque des revendications 1 à 4, **caractérisé en ce qu'**il prévoit des griffes (16) de forme complémentaire à celle des créneaux (15).

6. Procédé de montage selon l'une quelconque des revendications 1 à 5, **caractérisé en ce que** les griffes (16) sont portées par un outil (17) monté sur une broche (21) d'entrainement en rotation.

## Patentansprüche

1. Rollenmontageverfahren (1) in einem Rückhaltekäfig (2) der Rollen in einem Wälzlager, wobei das Verfahren vorsieht, einen Käfig (2) herzustellen, der zwei Kränze (3, 4), die axial beabstandet sind, und eine Vielzahl von Brücken (5) umfasst, die sich zwischen den Kränzen erstrecken, um zwischen zwei benachbarten Brücken (5) und einem Segment (3a, 4a) eines jeden der Kränze eine Wabe (6) zu bilden, in der eine Rolle (1) dazu bestimmt ist, zurückgehalten zu werden, und sich dabei um ihre eigene Achse drehen kann, wobei das Verfahren vorsieht, den Käfig in Drehung anzutreiben, und die Rollen bei der Drehung in ihrer jeweiligen Wabe (6) anzuordnen, wobei das Verfahren **dadurch gekennzeichnet ist, dass** es vorsieht, Lücken (15) in mindestens einem Kranz (3) zu bilden, wobei das Antreiben in Drehung des Käfigs (2) anhand von motorisierten drehenden Krallen (16) realisiert wird, die in die Lücken eingreifen.

2. Montageverfahren nach Anspruch 1, **dadurch gekennzeichnet, dass** es vorsieht, die Brücken (5) mit einer äußeren Struktur (8) auszustatten, die radial hervorstehend ist, wobei die Rollen (1) nacheinander radial gegenüber einer Wabe (6) und in umfänglicher Beeinflussung mit einer äußeren Struktur (8) einer Brücke (5) angeordnet sind, die die Wabe begrenzt, um die Rolle auf einem Weg in Drehung anzutreiben, auf dem die Rolle (1) radial in die Wabe geschoben wird.

3. Montageverfahren nach Anspruch 2, **dadurch gekennzeichnet, dass** es eine Nockenoberfläche (9) vorsieht, um die Rollen (1) auf ihrem Antriebsweg radial in die Waben (6) zu schieben.

4. Montageverfahren nach einem der Ansprüche 1 bis 3, **dadurch gekennzeichnet, dass** es vorsieht, den Käfig (2) durch Gießen anhand von Schiebern (10) zu realisieren, die mindestens teilweise die Waben (6) bilden, wobei die Schieber beim Ausformen aus den Waben heraus, in der radialen Richtung nach außerhalb der Waben herausgezogen werden.

5. Montageverfahren nach einem der Ansprüche 1 bis 4, **dadurch gekennzeichnet, dass** es Krallen (16) in einer ergänzenden Form zu jener der Lücken (15) vorsieht.

6. Montageverfahren nach einem der Ansprüche 1 bis 5, **dadurch gekennzeichnet, dass** die Krallen (16) von einem Werkzeug (17) getragen werden, das auf einer Drehantriebsspindel (21) montiert ist.

## Claims

1. A method for assembling rollers (1) in a cage (2) for retaining said rollers in a rolling bearing, the method providing for producing a cage (2) comprising two rings (3, 4) which are axially spaced apart and a plurality of bridges (5) extending between said rings so as to form, between two adjacent bridges (5) and a segment (3a, 4a) of each of said rings, a cell (6) wherein a roller (1) is intended to be retained while being able to rotate about its own axis, said method providing for rotating said cage and for disposing said rollers in their respective cell (6) during said rotation, said method being **characterised in that** it provides for forming slots (15) in at least one ring (3), the cage (2) rotation driving being carried out by means of rotatably motorised claws (16) which are engaged in said slots.

2. The assembling method according to claim 1, **characterised in that** it provides for equipping the bridges (5) with an outer structure (8) which projects radially, the rollers (1) being disposed successively radially facing a cell (6) and circumferentially interfering with an outer structure (8) of a bridge (5) delimiting said cell in order to rotate said roller over a stroke over which the roller (1) is radially pushed in said cell.

3. The assembling method according to claim 2, **characterised in that** it provides for a cam surface (9) to radially push the rollers (1) in the cells (6) over their driving stroke.

4. The assembling method according to any one of claims 1 to 3, **characterised in that** it provides for producing the cage (2) by moulding by means of drawers (10) at least partially forming the cells (6), said drawers being extracted from said cells during demoulding in the radial direction towards the outside of said cells.

5. The assembling method according to any one of claims 1 to 4, **characterised in that** it provides claws (16) of complementary shape to that of the slots (15).

6. The assembling method according to any one of claims 1 to 5, **characterised in that** the claws (16) are carried by a tool (17) assembled on a rotary drive spindle (21).
